(19) Europäisches Patentamt
European Patent Office
Office européen des brevets

(11) **EP 4 468 035 A1**

(12) **EUROPEAN PATENT APPLICATION**
published in accordance with Art. 153(4) EPC

(43) Date of publication:
**27.11.2024  Bulletin 2024/48**

(21) Application number: **22920463.1**

(22) Date of filing: **24.11.2022**

(51) International Patent Classification (IPC):
**G01S 17/89** (2020.01)

(52) Cooperative Patent Classification (CPC):
**G01S 17/89**

(86) International application number:
**PCT/JP2022/043367**

(87) International publication number:
**WO 2023/135943 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.01.2022  JP 2022004991**

(71) Applicant: **KOITO MANUFACTURING CO., LTD.
Minato-ku, Tokyo, 108-8711 (JP)**

(72) Inventors:
- **TAKAHASHI Masayuki
  Shizuoka-shi, Shizuoka 424-8764 (JP)**
- **HOSHI Kenichi
  Shizuoka-shi, Shizuoka 424-8764 (JP)**
- **SUZUKI Masatoshi
  Shizuoka-shi, Shizuoka 424-8764 (JP)**
- **ITABA Koji
  Shizuoka-shi, Shizuoka 424-8764 (JP)**

(74) Representative: **Grünecker Patent- und
Rechtsanwälte
PartG mbB
Leopoldstraße 4
80802 München (DE)**

(54) **MEASUREMENT DEVICE**

(57)     A measurement device (1) includes: a light emitting unit (10) configured to emit light to each of a plurality of measurement areas (1 to 5) at different heights; an exposure unit (20) having a plurality of exposure areas (1 to 5) respectively corresponding to the measurement areas (1 to 5) at different heights, and exposed to reflected light from the measurement areas by a plurality of light receiving elements (PD) respectively provided for the exposure areas (1 to 5); and a distance calculation unit (38) configured to calculate a distance (L) to a target in the measurement areas based on an exposure result of the exposure unit (20).

*FIG. 7*

MEASUREMENT AREA 5
MEASUREMENT AREA 4
MEASUREMENT AREA 3
MEASUREMENT AREA 2
MEASUREMENT AREA 1

UPPER
VERTICAL DIRECTION
HORIZONTAL DIRECTION
LOWER

EP 4 468 035 A1

Processed by Luminess, 75001 PARIS (FR)

**Description**

TECHNICAL FIELD

The present disclosure relates to a measurement device.

BACKGROUND ART

There is known a measurement device that measures a distance to a target based on emission of laser light from a light emitting unit and exposure to the reflected and returned light using an exposure unit. In Patent Literature 1, noise due to light other than reflected light is reduced by operating an imaging sensor near where the reflected light returns.

CITATION LIST

PATENT LITERATURE

Patent Literature 1: JP2019-191126A

SUMMARY OF INVENTION

TECHNICAL PROBLEM

For example, when a measurement target is a vehicle, light (light reflected by the target) may be reflected by a road surface at a place where the road surface is wet due to rain or the like or a place where the road surface is smoothly paved such as a parking lot. Accurate measurement may not be performed due to influence of this road surface reflection. In Patent Literature 1, influence of the light other than the reflected light can be reduced, but when positions of a light source and the imaging sensor are misaligned, an arrival position of the reflected light shifts depending on a distance to a target. Therefore, there is a possibility of exposure to light reflected from a road surface.
An object of the present disclosure is to reduce influence of road surface reflection.

SOLUTION TO PROBLEM

According to an aspect of the present disclosure for achieving the above object, there is provided a measurement device including: a light emitting unit configured to emit light to each of a plurality of measurement areas at different heights; an exposure unit having a plurality of exposure areas respectively corresponding to the measurement areas at different heights, and exposed to reflected light from the measurement areas by a plurality of light receiving elements respectively provided for the exposure areas; and a distance calculation unit configured to calculate a distance to a target in the measurement areas based on an exposure result of the exposure unit.

ADVANTAGEOUS EFFECTS OF INVENTION

According to the present disclosure, influence of road surface reflection can be reduced.

BRIEF DESCRIPTION OF DRAWINGS

[FIG. 1A] FIG. 1A is a diagram showing a configuration of a measurement device 1.
[FIG. 1B] FIG. 1B is a diagram showing light emission timings and exposure timings.
[FIG. 2] FIG. 2 is a diagram showing distance image creation using an indirect ToF.
[FIG. 3] FIG. 3 is a diagram showing a configuration example of an imaging sensor 22.
[FIG. 4] FIG. 4 is a diagram showing a relationship between light emission and exposure in a case of four taps.
[FIG. 5A] FIG. 5A is a diagram showing an area configuration of a light source 12 according to the present embodiment.
[FIG. 5B] FIG. 5B is a diagram showing an area configuration of the imaging sensor 22 according to the present embodiment.
[FIG. 6A] FIG. 6A is a diagram showing a case where a light source and a camera (imaging sensor) are provided at different heights.
[FIG. 6B] FIG. 6B is a diagram showing a positional relationship between the light source 12 and the imaging sensor 22 according to the present embodiment.
[FIG. 7] FIG. 7 is a diagram showing a measurement method using the measurement device 1 according to the present embodiment.
[FIG. 8A] FIG. 8A is a diagram showing an operation of a light emitting unit 10 (light source 12).
[FIG. 8B] FIG. 8B is a diagram showing an operation of an imaging unit 20 (imaging sensor 22).
[FIG. 9] FIG. 9 is a timing chart showing a relationship between light emission and exposure according to the present embodiment.
[FIG. 10] FIG. 10 is a diagram showing a relationship between imaging and reading.
[FIG. 11] FIG. 11 is a timing chart when measurement areas are adjacent to each other before and after switching.
[FIG. 12A] FIG. 12A is a diagram showing narrowing-down of measurement areas.
[FIG. 12B] FIG. 12B is a diagram showing narrowing-down of measurement areas.
[FIG. 13] FIG. 13 is a diagram showing measurement according to a comparative example.

DESCRIPTION OF EMBODIMENTS

Hereinafter, an embodiment of the present disclosure will be described with reference to the drawings.

= = = = = Embodiment = = = = =

<<Overview of Measurement Device>>

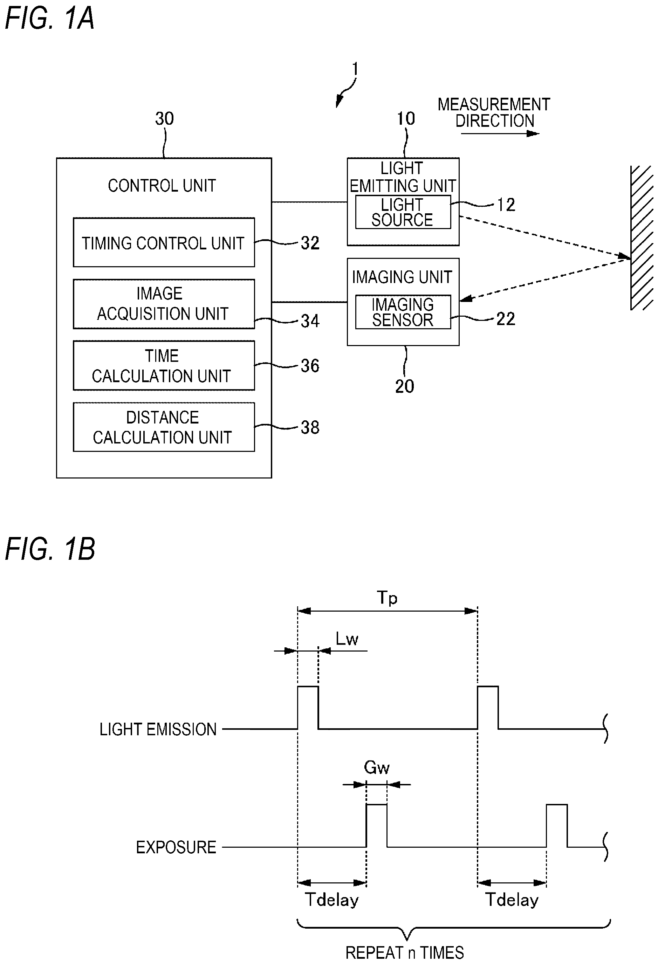

FIG. 1A is a diagram showing a configuration of a measurement device 1.

The measurement device 1 shown in FIG. 1A is a time-of-flight (ToF) device that measures a distance to an object in front. In the present embodiment, an indirect ToF camera is used. Such a measurement device 1 can remove influence of fog or rain, and perform imaging and measurement even in bad weather. The measurement device 1 is provided in a vehicle, for example.

As shown in FIG. 1A, the measurement device 1 includes a light emitting unit 10, an imaging unit 20, and a control unit 30.

The light emitting unit 10 emits (projects) light to a space to be imaged. The light emitting unit 10 controls light emission according to an instruction from the control unit 30. The light emitting unit 10 includes a light source 12 and a projecting optical system (not shown) that emits light generated by the light source 12.

The light source 12 includes light emitting elements 122 (to be described later). The light source 12 emits pulsed laser light under the control of the control unit 30. Hereinafter, this pulsed light is also referred to as a light emission pulse. The light source 12 will be described in detail later.

The imaging unit 20 (indirect ToF camera) performs imaging based on exposure to light reflected by a target of distance measurement. The imaging unit 20 includes an imaging sensor 22 and an exposure optical system (not shown) that guides incident (exposure) light to the imaging sensor 22. The imaging unit 20 corresponds to an "exposure unit".

The imaging sensor 22 images an object to be imaged according to an instruction from the control unit 30 and outputs image data obtained by imaging to an image acquisition unit 34 of the control unit 30. A value (pixel data) of each pixel constituting the image data indicates a signal value corresponding to an exposure amount. The imaging sensor 22 will be described in detail later.

The control unit 30 controls the measurement device 1. The control unit 30 is implemented by a hardware configuration such as an element or a circuit, such as a memory or a CPU. The control unit 30 implements a predetermined function by the CPU executing a program stored in the memory. FIG. 1A shows various functions implemented by the control unit 30. The control unit 30 includes a timing control unit 32, the image acquisition unit 34, a time calculation unit 36, and a distance calculation unit 38.

The timing control unit 32 controls a light emission timing of the light emitting unit 10 and an exposure timing of the imaging unit 20. The light emission timing and the exposure timing will be described later.

The image acquisition unit 34 acquires image data from the imaging sensor 22 of the imaging unit 20. The image acquisition unit 34 includes a memory (not shown) that stores the acquired image data.

The time calculation unit 36 calculates an arrival time (time of flight of light: ToF) from when the light source 12 of the light emitting unit 10 emits light until the reflected light reaches the imaging sensor 22 of the imaging unit 20.

The distance calculation unit 38 calculates a distance based on an exposure result of the imaging sensor 22 and the arrival time of the light. As will be described later, a distance image can be acquired by calculating a distance for each pixel.

<<Indirect ToF>>

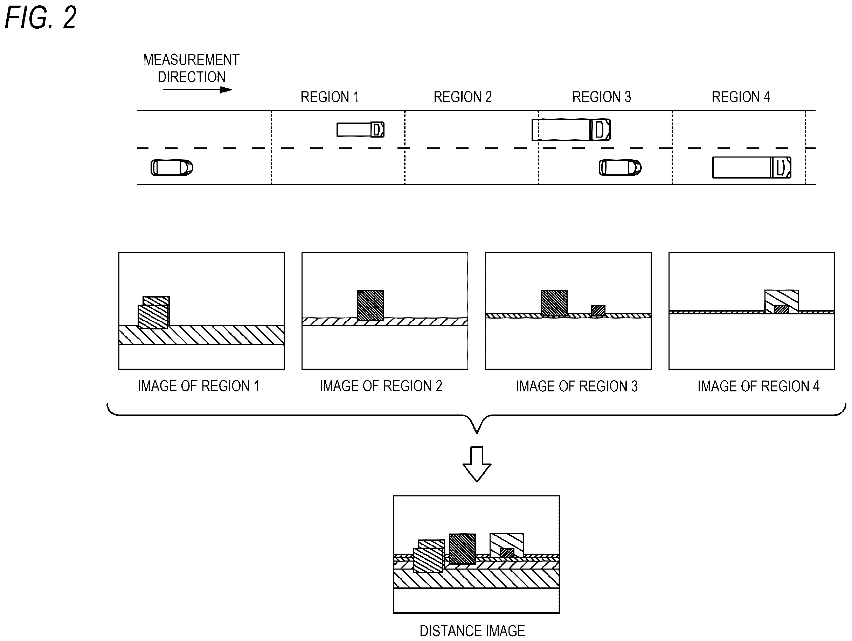

FIG. 1B is a diagram showing light emission timings and exposure timings. FIG. 2 is a diagram showing distance image creation using the indirect ToF.

First, as shown in FIG. 1B, the control unit 30 (timing control unit 32) causes the light emitting unit 10 to emit a light emission pulse. A width of the light emission pulse (hereinafter, pulse width) is Lw.

The control unit 30 (timing control unit 32) causes the imaging sensor 22 of the imaging unit 20 to be exposed to the reflected light after a time Tdelay from emission of the light emission pulse. An exposure period is set based on the delay time Tdelay and an exposure width Gw. The exposure period is a period in which an exposure level is a high level (H level).

The time Tdelay is a time (delay time) from the emission of the light emission pulse to a start of the exposure period. The delay time Tdelay is set according to a distance to a measurement target region. That is, by setting a short time from when the light emitting unit 10 emits the light emission pulse until the imaging sensor 22 starts exposure, an image of a target (object that reflects light) in a short distance region can be acquired. Conversely, by setting a long time from when the light emitting unit 10 emits the light emission pulse until the imaging sensor 22 starts exposure, an image of a target in a long distance region can be acquired.

The exposure width Gw is a width of the exposure period (that is, a period from a start of the exposure to an end of the exposure). The width of the exposure period defines a length of the measurement target region in a measurement direction. Therefore, the smaller the exposure width Gw is, the higher a distance resolution becomes.

In the present embodiment, as shown in FIG. 2, different exposure periods are set according to the distance to the measurement target region. Four regions are shown in FIG. 2 for simplicity, but the number N of regions is actually greater than four.

The light emission and the exposure are repeated a plurality of times at a cycle Tp shown in FIG.

1B. This is for storing charges in the imaging sensor 22 to be described later. The farther a region i is, the greater the number $n_i$ of times of repetition is set. This is because the farther the region i is, the weaker the reflected light becomes.

In an image obtained for each region, a target (object that reflects light) present in the region is imaged. The image for each region may be referred to as a "range image". A value (image data) of each pixel constituting the image indicates a signal value corresponding to an exposure amount.

As shown in FIG. 2, the measurement device 1 according to the present embodiment acquires image data on a plurality of regions of different distances, and can acquire a distance image indicating a distance to a target based on a plurality of pieces of acquired image data. This distance image may be referred to as a "frame".

When there is one measurable region for once light emission, it takes time to acquire image data on a large number of regions, so that a measurement time becomes long (it is difficult to increase a speed of a flame per seconds (FPS)). Therefore, in the present embodiment, a plurality of exposure periods are set for once light emission, and a plurality of regions are measured for once light emission. Therefore, in the present embodiment, a multi-tap (specifically, four taps) CMOS image sensor is used as the imaging sensor 22. However, the imaging sensor 22 is not limited to the multi-tap CMOS image sensor.

<<Imaging Sensor 22>>

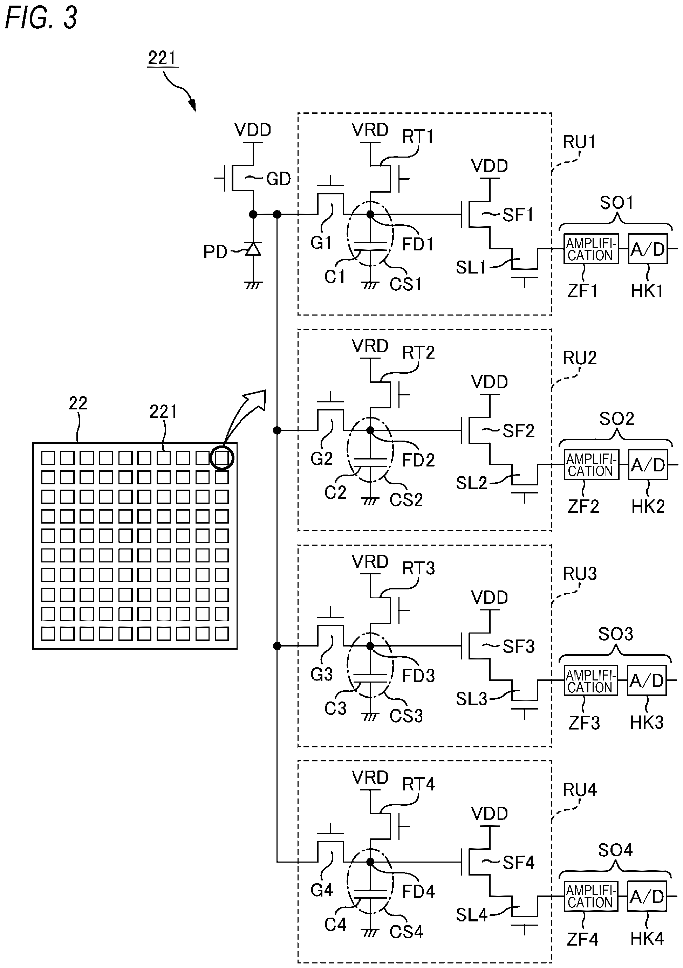

FIG. 3 is a diagram showing a configuration example of the imaging sensor 22.

As shown in FIG. 3, a plurality of pixels 221 are two-dimensionally arranged (for example, $640 \times 480$) in the imaging sensor 22. One light receiving element PD and a plurality of (here, four) signal reading units RU1 to RU4 corresponding to the one light receiving element PD are provided in each pixel 221. Signal output units SO1 to SO4 are provided for the signal reading units RU1 to RU4, respectively. The signal reading units RU1 to RU4 have the same configuration (only reference numerals of components are different). The signal output units SO1 to SO4 have the same configuration. In the following description, the signal reading units and the signal output units will be mainly described using the signal reading unit RU1 and the signal output unit SO1.

The light receiving element PD is an element (for example, a photodiode) that generates charges corresponding to an exposure amount.

The signal reading unit RU1 includes a storage unit CS1, a transistor G1, a reset transistor RT1, a source follower transistor SF1, and a selection transistor SL1.

The storage unit CS1 stores the charges generated by the light receiving element PD, and includes a storage capacitor C1 and a floating diffusion FD1.

The transistor G1 is provided between the light receiving element PD and the storage unit CS1. The transistor G1 is turned on in a predetermined exposure period (for example, an exposure period 1 to be described later) and supplies the charges generated by the light receiving element PD to the storage unit CS1 based on an instruction of the timing control unit 32 of the control unit 30. Similarly, transistors G2 to G4 supply the charges generated by the light receiving element PD to the storage units CS2 to CS4, respectively, based on instructions from the timing control unit 32. That is, the transistors G1 to G4 distribute the charges generated by the light receiving element PD to the storage units CS1 to CS4 according to the exposure period.

The charges are repeatedly stored in each storage unit according to the number n of times of repetition. The charges stored in each storage unit correspond to an amount of light to which the light receiving element PD is exposed in each exposure period.

When the selection transistor SL1 of the signal reading unit RU1 is selected, the signal output unit SO1 outputs a signal value corresponding to charges stored in the storage unit CS1. As shown in the drawing, the signal output unit SO1 includes an amplification circuit ZF1 that amplifies an output of the signal reading unit RU1 and an A/D conversion circuit HK1 that converts an output (analog signal) of the amplification circuit ZF 1 into a digital signal. The signal output unit SO1 converts the charges (exposure amount in the exposure period) stored in the storage unit CS1 into a signal value (digital signal) corresponding to the charges and outputs the signal value to the image acquisition unit 34 of the control unit 30. The signal value (digital signal) based on the charges stored in the storage unit CS1 is a signal value according to an exposure amount in the exposure period.

With such an imaging sensor 22, four regions can be measured by imaging once. That is, four range images are obtained by imaging once. The number of (here, four) range images obtained by imaging once may be referred to as a "subframe". A plurality of regions (here, four regions) measured by imaging once may be referred to as a "zone".

<<Image Acquisition>>

First, the control unit 30 (timing control unit 32) causes the light emitting unit 10 to emit light at the cycle Tp (see FIG. 1B), and controls an exposure timing of the imaging unit 20 according to a light emission timing. Then, the image acquisition unit 34 acquires an image (image data) captured by the imaging unit 20 at each exposure timing.

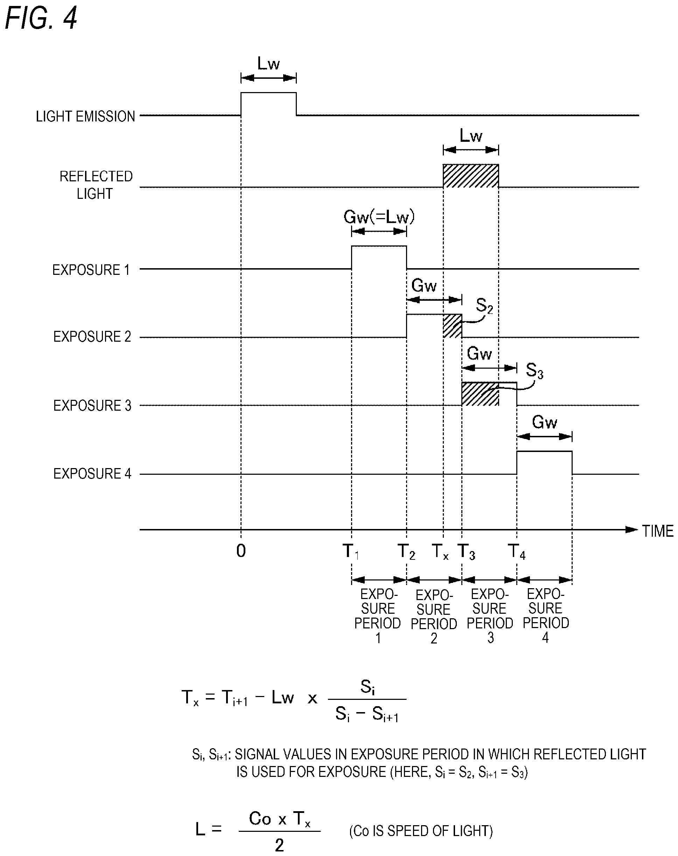

First, images of a zone 1 (regions 1 to 4) is acquired. That is, the timing control unit 32 causes the imaging sensor 22 of the imaging unit 20 perform exposure for each pixel of an image in exposure periods 1 to 4 (see FIG. 4) delayed from the light emission timing.

The timing control unit 32 causes the exposure to be repeatedly performed for each cycle Tp, and stores the charges in the storage units CS1 to CS4.

The image acquisition unit 34 acquires signal values corresponding to charges stored in the storage units CS1 to CS4 via the signal output units SO1 to SO4. Then, the control unit 30 writes image data on acquired range images (subframes) of the regions 1 to 4 into an image memory of the image acquisition unit 34.

Next, similarly, the control unit 30 acquires images of the zone 2 (regions 5 to 8). Then, the control unit 30 writes image data on range images (subframes) of the regions 5 to 8 into the image memory of the image acquisition unit 34. The delay time Tdelay from a light emission timing in the zone 2 (regions 5 to 8) is set to be longer than that in a case of the zone 1 (regions 1 to 4). As described above, the number of times of repetition (the number of times of charge accumulation) is set to increase as the measurement target region becomes further away. Although light emission pulses (light emission timings) are different in the region 4 and the region 5, exposure periods of the region 4 and the region 5 are consecutive with the light emission pulse as a reference. In this way, the consecutive exposure periods are not limited to exposure periods having the same light emission timing, and may include exposure periods having different light emission timings.

By performing the above operation up to a region N, images up to the region N (images of all the regions) are acquired.

«Calculation of Arrival Time and Distance»

FIG. 4 is a diagram showing a relationship between light emission and exposure in a case of four taps.

In FIG. 4, a pulse width of a light emission pulse is Lw. A pulse width of the reflected light is also denoted by Lw. In this example, exposure 1 to 4 is set. A width (exposure width) of each exposure period of the exposure 1 to 4 is the same as the pulse width Lw of the light emission pulse. The exposure period is a period in which an exposure level in the drawing is a high level (H level). H/L levels of the exposure 1 to 4 indicate whether the transistors G1 to G4 in FIG. 3 are turned on or off. For example, the transistor G1 is turned on in an H-level exposure period 1 of the exposure 1, and the charges generated by the light receiving element PD is stored in the storage capacitor C1 of the storage unit CS1.

Here, a case where the reflected light is used for exposure in an exposure period 2 and an exposure period 3 will be described (the reflected light may reach a period different from the exposure period 2 and the exposure period 3, and for example, the reflected light may be used for exposure in the exposure period 1 and the exposure period 2).

In the exposure 1, a region (region 1) defined by a delay time T1 and the exposure width Gw (= Lw) with respect to a start of light emission of the light emission pulse is measured. In this example, the reflected light is used for exposure in the exposure period 1, and the charges are not stored in the storage unit CS1 for the pixel 221 of the imaging sensor 22 (a signal value $S_1$ acquired in the exposure period 1 is zero).

The exposure period 2 corresponding to a region (region 2) next to the region 1 is set in the exposure 2. The pixel 221 of the imaging sensor 22 acquires a signal value $S_2$ corresponding to an exposure amount of the reflected light in the exposure period 2.

The exposure period 3 corresponding to a region (region 3) next to the region 2 is set in the exposure 3. The pixel 221 of the imaging sensor 22 acquires a signal value $S_3$ corresponding to an exposure amount of the reflected light in the exposure period 3.

An exposure period 4 corresponding to a region (region 4) next to the region 3 is set in the exposure 4. In this example, the reflected light is used for exposure in the exposure period 4, and the charges are not stored in the storage unit CS4 for the pixel 221 of the imaging sensor 22 (a signal value $S_4$ acquired in the exposure period 4 is zero).

FIG. 4 is shown based on charges in once exposure for description, but actually a signal value $S_i$ (here, $S_1$ to $S_4$) is a signal value according to charges (corresponding to an exposure amount) stored by repeating the exposure for the number n of times of repetition. The signal output units SO1 to SO4 for the pixel 221 of the imaging sensor 22 respectively output signal values $S_1$ to $S_4$ according to the charges stored in the storage units CS1 to CS4. The signal values $S_1$ to $S_4$ correspond to values (pixel data) of pixels constituting image data on images (range images) of the regions 1 to 4, respectively.

The image acquisition unit 34 of the control unit 30 acquires the signal values $S_1$ to $S_4$ (signal values according to the charges stored in the storage units CS1 to CS4) of the pixels 221 from the imaging sensor 22. Accordingly, the image acquisition unit 34 acquires the image data on the regions 1 to 4. Similarly, the image acquisition unit 34 acquires the images up to the region N (images of all the regions).

The time calculation unit 36 of the control unit 30 calculates an arrival time Tx of the reflected light. Specifically, first, the time calculation unit 36 specifies a signal value S of exposure to the reflected light from the signal values $S_1$ to $S_4$ (signal values $S_1$ to $S_N$). For example, the time calculation unit 36 specifies a signal value of a signal corresponding to two consecutive exposure periods and having the highest exposure amount. For example, when a signal value corresponding to an exposure period i in which the reflected light starts exposure is $S_i$, two signal values $S_i$ and $S_{i+1}$ are specified. Here, the signal values $S_2$ and $S_3$ correspond to the signal values $S_i$ and $S_{i+1}$ of exposure to the reflected light.

The time calculation unit 36 uses the signal values $S_i$ and $S_{i+1}$ to calculate the flight time (hereinafter also referred to as an arrival time) Tx of the light by the following Equation (1).

$$Tx = T_{i+1} - Lw \times Si/(S_i + S_{i+1})...(1)$$

When a distance to a target is L, the distance L to the target is calculated based on the arrival time Tx. That is, since the light travels twice the distance L during the arrival time Tx, when a speed of the light is Co, L = (Co × Tx)/2...(2).

The distance calculation unit 38 calculates the distance L to the target by Equation (2). In particular, the distance calculation unit 38 according to the present embodiment calculates the distance L to the target in a measurement area for each measurement area to be described later.

<<Areas of Light Source 12 and Imaging Sensor 22>>

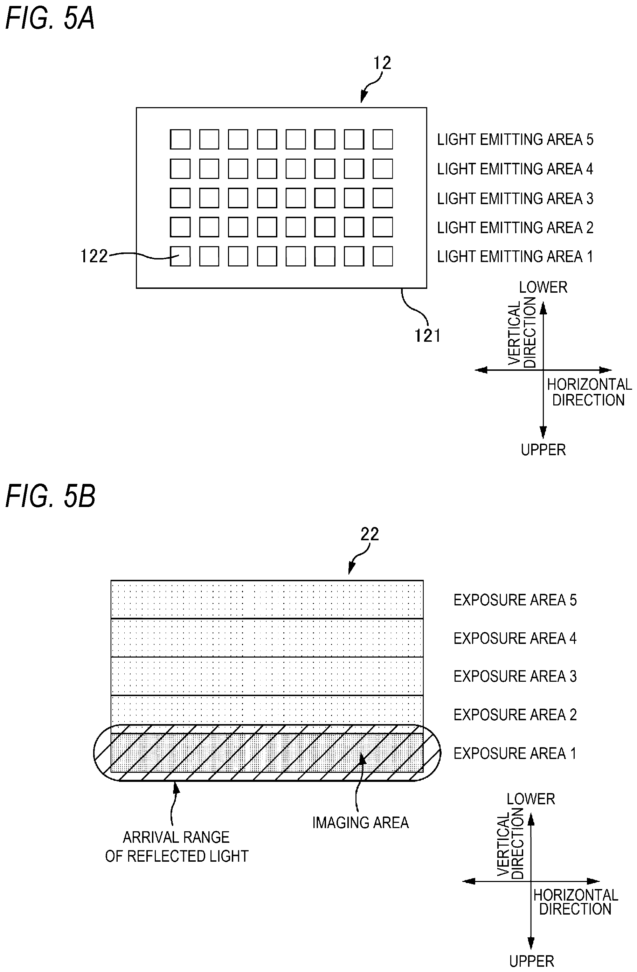

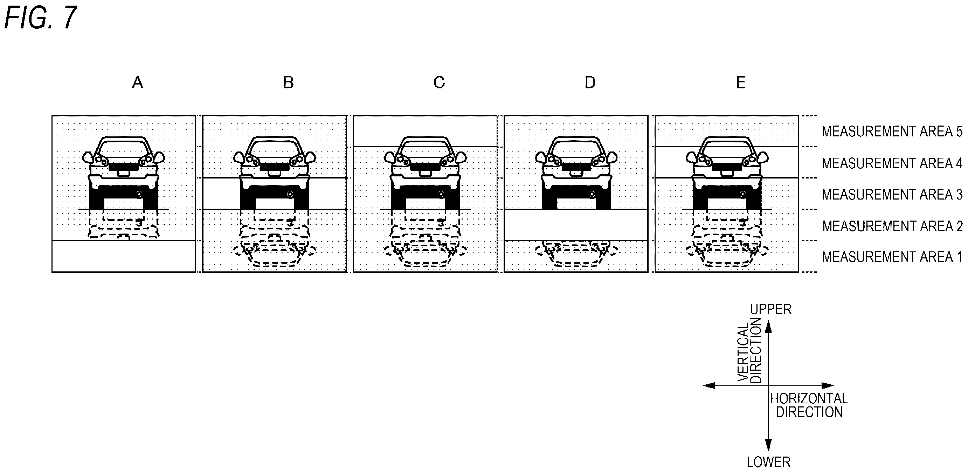

FIG. 5A is a diagram showing an area configuration of the light source 12 according to the present embodiment. FIG. 5B is a diagram showing an area configuration of the imaging sensor 22 according to the present embodiment. In FIG. 5B, each pixel is not shown. In FIGS. 5A and 5B, each area is shown to correspond to a measurement area (FIG. 7) to be described later. Since an image is vertically inverted by an optical system (lens), an upper-lower relationship is opposite to that of the measurement area (FIG. 7). A horizontal direction is a direction orthogonal to a vertical direction and is a direction parallel to a road surface. Here, a direction (for example, a left-right direction) orthogonal to the measurement direction (for example, a front-back direction) in FIGs. 1 and 2 is shown.

<Light Source 12>

As shown in FIG. 5A, the light source 12 includes a light source substrate 121 and a plurality of light emitting elements 122.

The light source substrate 121 is a plate-shaped member on which the light emitting elements 122 are arranged. The light source substrate 121 has a surface facing the measurement direction, and the plurality of light emitting elements 122 are arranged on the surface.

The light emitting element 122 is an element that emits light when supplied with a drive current. Similarly to the pixels 221 of the imaging sensor 22, the plurality of light emitting elements 122 are two-dimensionally arranged on the surface of the light source substrate 121. More specifically, the plurality of light emitting elements 122 are arranged to be divided into five areas (light emitting areas 1 to 5) in an upper-lower direction so as to correspond to a plurality of (five in the present embodiment) measurement areas (to be described later) at different heights in the vertical direction. In other words, the light source 12 (light emitting unit 10) according to the present embodiment has five light emitting areas respectively corresponding to five measurement areas at different heights.

For example, a light emitting area 1 corresponds to the lowest measurement area 1 among the five measurement areas. A light emitting area 2 corresponds to a measurement area 2 above the measurement area 1. Similarly, light emitting areas 3 to 5 correspond to measurement areas 3 to 5, respectively.

In each light emitting area, the light emitting elements 122 are arranged in the horizontal direction (left-right direction). In the present embodiment, the control unit 30 causes the light emitting elements 122 to emit light for each of the plurality of light emitting elements 122 (areas) arranged in the horizontal direction. Accordingly, the light source 12 (light emitting unit 10) can emit light to the measurement area corresponding to each light emitting area.

However, a method of emitting light to each measurement area is not limited to the above-described method. For example, a method (scanning method) may be used in which a plurality of light emitting elements arranged in the horizontal direction emit light by moving in a height direction (vertical direction) according to switching of a measurement area.

<Imaging Sensor 22>

As shown in FIG. 5B, the imaging sensor 22 according to the present embodiment has five exposure areas (exposure areas 1 to 5) corresponding to five measurement areas (to be described later) at different heights in the vertical direction. In each exposure area, the plurality of pixels 221 (in other words, the plurality of light receiving elements PD) are provided. The imaging unit 20 is exposed to reflected light from a corresponding measurement area by the plurality of light receiving elements PD provided for each exposure area. For example, in FIG. 5B, the exposure area 1 is an imaging area, and in this case, reflected light from the corresponding measurement area 1 is used for exposure.

As shown in the drawing, an arrival range of the reflected light is wider than the exposure area. Accordingly, the reflected light can also be used for exposure in the pixel 221 (light receiving element PD) at an end of the exposure area.

<Positions of Light Source 12 and Imaging Sensor 22>

If the light source and the imaging sensor are arranged at different heights, there is a possibility that the imaging sensor cannot be exposed due to influence of the distance to the target.

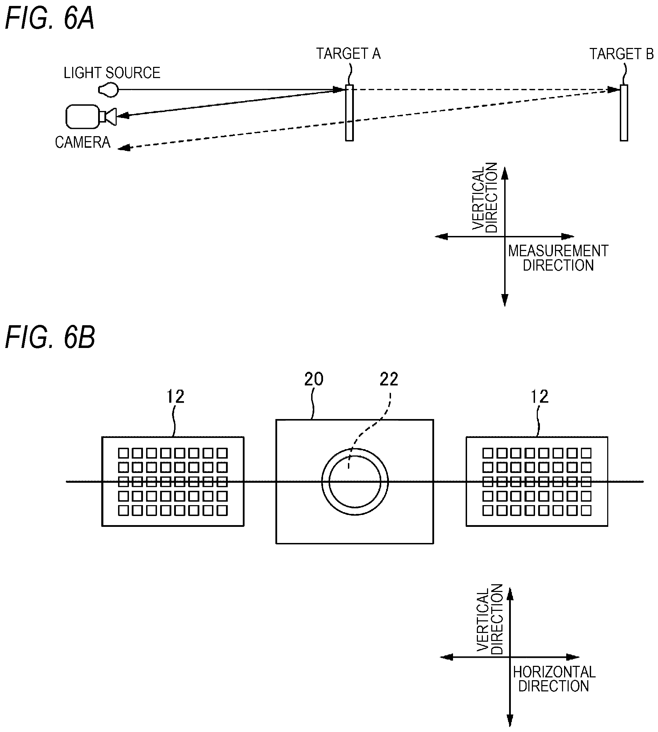

FIG. 6A is a diagram showing a case where a light source and a camera (imaging sensor) are provided at different heights. For example, as shown in the drawing, when a setting is made such that light is emitted from the light source to a target A at a certain distance and the camera (imaging sensor) at a different height is exposed to the reflected light, an arrival position (height) of reflected light of the light emitted to a target B at a different distance deviates from a position of the imaging sensor.

FIG. 6B is a diagram showing a positional relationship between the light source 12 and the imaging sensor 22 according to the present embodiment.

In the present embodiment, the light source 12 and the imaging sensor 22 are disposed at the same height. The imaging sensor 22 is provided at the same height as the light source 12 in the imaging unit 20 in the drawing. More specifically, an light emitting area of the light source 12 and an exposure area of the imaging sensor 22 corresponding to the light emitting area are disposed at the same height. Accordingly, a correspondence relationship among the light emitting area, a measurement area, and the exposure area is not influenced by a distance to a target. That is, regardless of the distance to the target, the reflected light of light emitted from the light emitting area of the light source 12 (light that reaches the target and reflected thereby) can be used for exposure in the corresponding exposure area of the imaging sensor 22.

In FIG. 6B, two light sources 12 are provided to sandwich the imaging sensor 22 in the horizontal direction (at the same height as the imaging sensor 22). However, the present disclosure is not limited thereto, and either one may be used (one light source 12 may correspond to one imaging sensor 22). Two or more light sources 12 may correspond to one imaging sensor 22.

«Influence of Road Surface Reflection»

<Comparative Example>

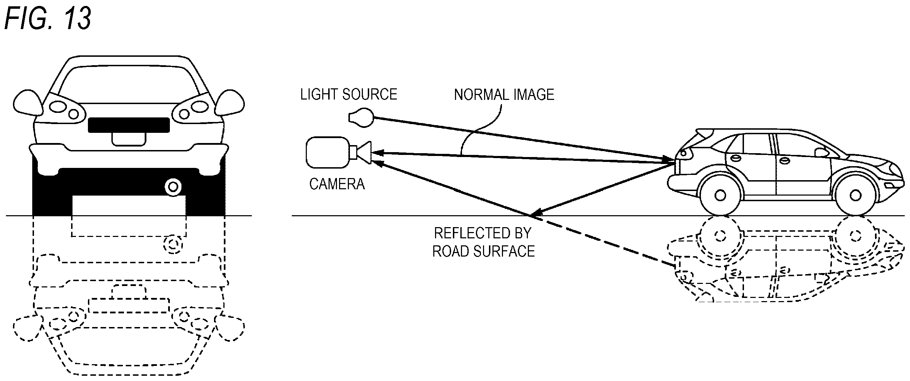

FIG. 13 is a diagram showing measurement according to a comparative example. In a light source used in the comparative example, light emitting elements are two-dimensionally arranged similarly to the light source 12 according to the present embodiment, and in an imaging sensor of a camera, pixels (light receiving elements) are two-dimensionally arranged similarly to the imaging sensor 22 according to the present embodiment.

In the comparative example, the light source irradiates a measurement target (here, a vehicle) with light by full light emission, and a camera (imaging sensor) is exposed to the reflected light by overall surface exposure.

For example, when a road surface has a high reflectance, such as a place where a road surface is wet due to rain or the like or a place where a road surface is smoothly paved in a parking lot or the like, as shown in the drawing, the reflected light from the target (vehicle) may be further reflected by the road surface, and the camera (imaging sensor) may be exposed to the reflected light (reflected light via the road surface).

In this case, a reflected image of the vehicle is reflected by the reflected light via the road surface, and thus accurate measurement may not be performed. That is, a pixel (light receiving element) that should not actually be exposed to reflected light may be exposed to light reflected from the road surface, and charges may be stored in a storage unit for the pixel. Accordingly, an image showing the vehicle at a position on the road surface may be generated in a distance image.

Therefore, influence of such road surface reflection is reduced in the present embodiment.

<Measurement Method according to Present Embodiment>

FIG. 7 is a diagram showing a measurement method using the measurement device 1 according to the present embodiment. As shown in the drawing, the measurement device 1 according to the present embodiment is divided into five areas (measurement areas 1 to 5) at different heights in the vertical direction, and performs measurement by sequentially switching for each measurement area. The five measurement areas are referred to as a measurement area 1, a measurement area 2, ..., and a measurement area 5 in this order from a lower side. In FIG. 7, a non-hatched white area is a measurement target area. For example, in A, the measurement area 1 is a measurement target. In B, the measurement area 3 is a measurement target. In the present embodiment, the control unit 30 performs switching of the measurement area (switching of light emission and exposure). The memory of the control unit 30 stores in advance a program for executing switching such as an order and a timing for switching of the measurement area.

For example, when the measurement target is the measurement area 1, among the five light emitting areas 1 to 5 of the light emitting unit 10 (light source 12), the control unit 30 causes only the light emitting elements 122 in the light emitting area 1 corresponding to the measurement area 1 to emit light, and does not cause the light emitting elements 122 in the light emitting areas 2 to 5 to emit light. That is, the light emitting unit 10 irradiates only the measurement area 1 with light, and does not irradiate other measurement areas (measurement areas 2 to 5) with light. In a case of the drawing, since the vehicle is located in the measurement areas 3 to 5, the vehicle is not irradiated with light (light is irradiated only on the road surface).

Among the five exposure areas 1 to 5 of the imaging unit 20, the control unit 30 causes only the pixels 221 (light receiving elements PD) of the exposure area 1 corresponding to the measurement area 1 to be exposed and does not cause the light receiving elements PD of the exposure areas 2 to 5 to be exposed (or among the five exposure areas 1 to 5 of the imaging unit 20, the control unit 30 acquires signals of only the pixels 221 of the exposure area 1 corresponding to the measurement area 1 and does not acquire signals of the pixels 221 of the exposure areas 2 to 5). That is, the imaging unit 20 images only the measurement area 1 and does not image other measurement areas (measurement areas 2 to 5).

Accordingly, when measuring the measurement area 1 (or the measurement area 2), since the light emitting unit 10 does not irradiate the measurement areas 3 to 5 (areas where the vehicle is located) with light, there is no light directed from the vehicle toward the road surface as shown in the comparative example (FIG. 13). Therefore, in A (and D), since no light is reflected by the road surface, no reflected light (reflected image) via the road surface is reflected.

When measuring the measurement area 3 (or the measurement areas 4 and 5), even if there is the reflected light via the road surface in the comparative example (FIG. 13), the imaging unit 20 does not measure the measurement areas 1 and 2, and thus the reflected light via the road surface is not used for exposure (there is no influence of the reflected light via the road surface).

Therefore, in the measurement method according to the present embodiment, the influence of road surface reflection can be reduced.

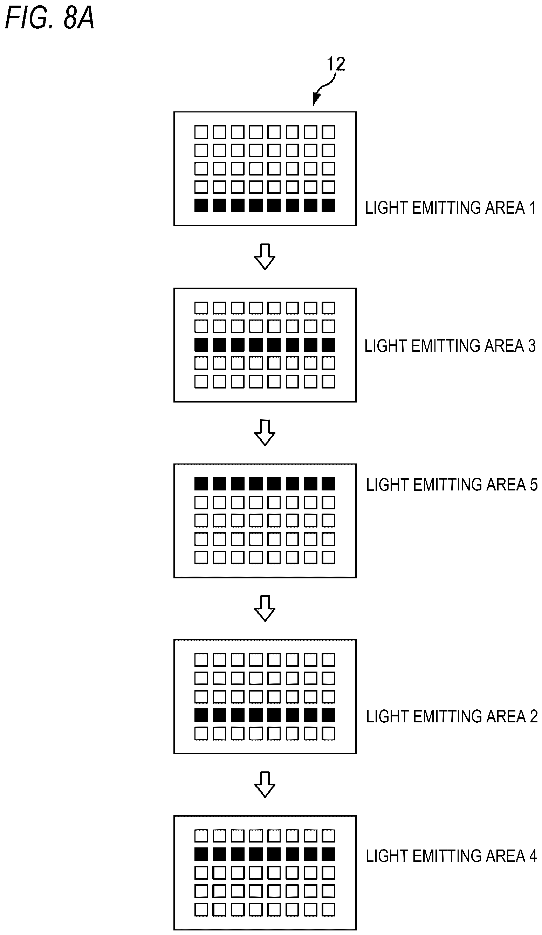

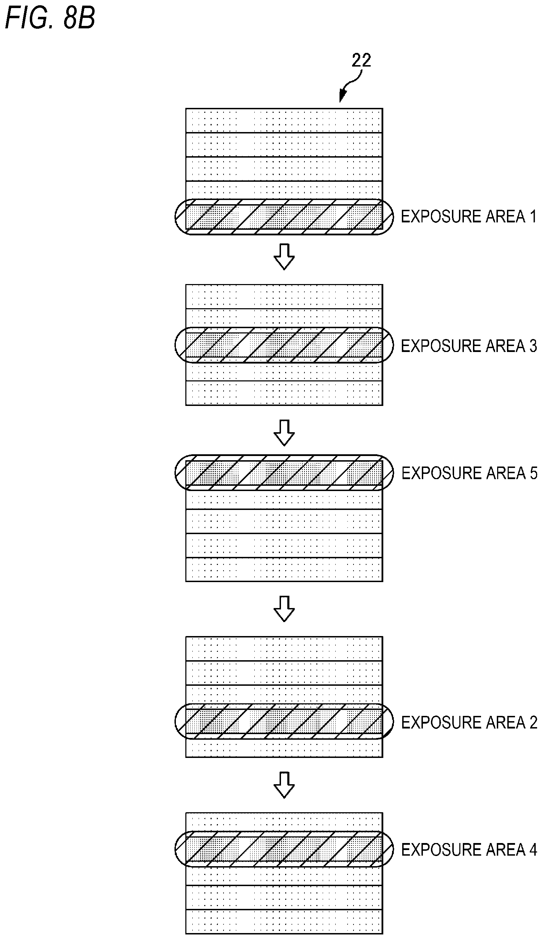

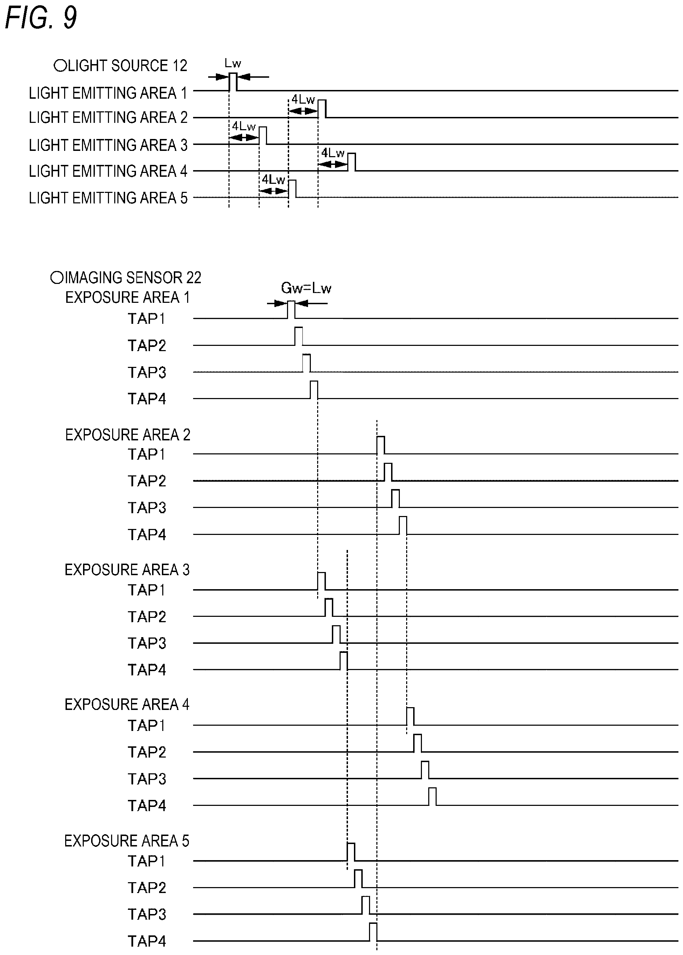

Next, an operation of the measurement device 1 according to the present embodiment will be described. FIG. 8A is a diagram showing an operation of the light emitting unit 10 (light source 12). FIG. 8B is a diagram showing an operation of the imaging unit 20 (imaging sensor 22). FIG. 9 is a timing chart showing a relationship between light emission and exposure according to the present embodiment. A relationship between light emission and exposure in each area is the same as that in FIG. 4 (TAP1 to TAP4 correspond to the exposure 1 to 4 in FIG. 4).

FIG. 9 shows a relationship between once light emission and exposure for each area for description, but actually, the light emission and the exposure are repeated at a predetermined cycle (corresponding to the cycle Tp in FIG. 1B). Here, four different taps of exposure (measurement for four regions) with different delay time from a light emission pulse are shown, but actually, similar measurement is performed by further increasing the delay time from generation of the light emission pulse, and the measurement is performed for all the regions (regions 1 to N).

The measurement device 1 according to the present embodiment performs light emission and exposure at different timings for each area. Specifically, as shown in FIG. 7, measurement is performed in an order of the measurement area 1 → the measurement area 3 → the measurement area 5 → the measurement area 2 → the measurement area 4.

As shown in FIG. 9, the control unit 30 (timing control unit 32) causes the light emission pulse to be emitted from the light emitting area 1 corresponding to the measurement area 1 for a period of the pulse width Lw. Accordingly, the light emitting area 1 (light emitting elements 122) emits light as shown in FIG. 8A.

Next, after 4Lw elapses since the light emitting area 1 starts to emit light, the control unit 30 (timing control unit 32) causes the light emitting area 3 corresponding to the measurement area 3 to emit a light emission pulse having the pulse width Lw. Accordingly, the light emitting elements 122 in the light emitting area 3 emit light as shown in FIG. 8A. Here, a reason why a light emission start timing of the light emitting area 3 is set to be four times the pulse width (Lw) with respect to a light emission start timing of the light emitting area 1 is that it takes a time four times (four taps) the exposure width Gw (here, Lw) when the imaging unit 20 performs exposure for one measurement area. However, it is not limited to four times, and may be four times or more. Thereafter, similarly, the control unit 30 causes the light emission pulse to be emitted from the light emitting area 5 → the light emitting area 2 → the light emitting area 4 every time 4Lw elapses.

The control unit 30 (timing control unit 32) causes the exposure area 1 of the imaging sensor 22 to be exposed after a predetermined time (after a time corresponding to a region to be measured elapses) since the light emitting area 1 emits the light emission pulse (see FIG. 8B).

At this time, the control unit 30 first turns on the transistor G1 for each pixel 221 in the exposure area 1 of the imaging sensor 22 (TAP1 is set to the H level), and stores charges generated by the light receiving element PD in the storage unit CS 1. Thereafter, as shown in FIG. 9, the control unit 30 turns on the transistors G2, G3, and G4 in order every time the exposure width Gw elapses, and switches the storage unit CS that stores the charges. Accordingly, charges corresponding to exposure amounts of the four regions at different distances in the measurement area 1 are stored in the storage units CS for the exposure area 1 of the imaging sensor 22.

After exposure in the exposure area 1 is completed (and after a predetermined time elapses since the light emitting elements 122 in the light emitting area 3 emit light), the control unit 30 causes the exposure area 3 to be exposed to reflected light of the light emitted from the light emitting area 3. The exposure operation is the same as that for the exposure area 1, and description thereof will be omitted.

Similarly, the control unit 30 (timing control unit 32) performs exposure in an order of the exposure area 5 → the exposure area 2 → the exposure area 4. Based on the exposure result, the time calculation unit 36 calculates the arrival time Tx of the reflected light in each measurement area by Equation (1). The distance calculation unit 38 calculates the distance L to the target in each measurement area by Equation (2).

If the measurement area 4 is to be measured after the measurement area 3 is measured, the reflected light of the light emission pulse emitted before the measurement area 3 is measured may be used for exposure after measurement of the measurement area 4 is started. This is because a range including the measurement area 3 is irradiated with light (the measurement area 4 is also irradiated with light) when measuring the measurement area 3. In this way, when two measurement areas before and after switching are adjacent to each other, the two measurement areas may be influenced by light emission pulses emitted to the adjacent areas.

In contrast, in the present embodiment, the control unit 30 performs control such that two measurement areas before and after switching are not adjacent to each other. For example, the control unit 30 causes the measurement area 5 to be measured after the measurement area 3 is measured. Accordingly, it is possible to reduce influence of adjacent measurement areas and improve measurement accuracy.

In the present embodiment, as shown in FIG. 9, the control unit 30 starts light emission of the light emitting area 3 after light emission of the light emitting area 1 and before exposure of the exposure area 1. The control unit 30 starts light emission of the light emitting area 5 after the light emission of the light emitting area 3 and before exposure of the exposure area 3. In this way, the control unit 30 starts light emission of a light emitting area corresponding to a next measurement area after light emission of a light emitting area corresponding to a certain measurement area and before exposure of an exposure area corresponding to the measurement area. Accordingly, a measurement time can be shortened. However, the light emission corresponding to the next measurement area may be performed after light emission and exposure corresponding to the certain measurement area are completed.

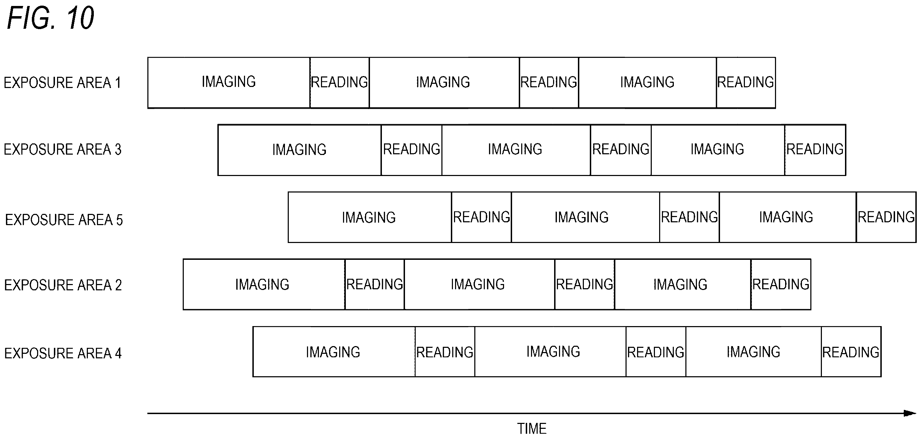

FIG. 10 is a diagram showing a relationship between imaging and reading.

In FIG. 10, an imaging period is a period in which charges are stored in the storage units CS1 to CS4 for each pixel 221 of the imaging sensor 22. In this period, an operation of light emission and exposure as shown in FIG. 9 is repeated.

A reading period is a period in which a signal value according to the charges stored in the storage units CS1 to CS4 for each pixel 221 is output. In the imaging sensor 22 according to the present embodiment, the charges stored in the storage units CS1 to CS4 are AD-converted by A/D conversion circuits HK1 to HK4 through amplification circuits ZF1 to ZF4, respectively. AD conversion is performed for each horizontal line arranged in the horizontal direction among the plurality of two-dimensionally arranged pixels 211. For example, each horizontal line is AD-converted and read in an order from an upper side to a lower side or from the lower side to the upper side. During this reading period, no new imaging can be performed.

When the overall surface exposure is performed as in the comparative example, it takes time to read all horizontal lines (all pixels) of the imaging sensor 22 (it takes a time equivalent to five times the reading period shown in FIG. 10). During the reading period, no new imaging can be performed.

In contrast, the imaging sensor 22 according to the present embodiment performs exposure and reading for each of the five exposure areas. Therefore, the number of pixels to be read once is 1/5 of that in the case of the overall surface exposure. Thus, once reading period (output time) can be shortened.

In the present embodiment, as shown in FIG. 10, while outputting (reading) an exposure result in a certain exposure area, it is possible to perform imaging in another exposure area. For example, while reading the exposure area 1, it is possible to perform imaging in the exposure areas 2 to 5. Accordingly, a frame rate can be improved. Therefore, in the present embodiment, imaging and reading can be efficiently performed, and an output time can be synergistically reduced.

<Modification 1>

In the embodiment described above, the measurement areas are not adjacent before and after the switching of the measurement area. However, the present disclosure is not limited thereto, and the measurement areas may be adj acent to each other before and after the switching of the measurement area.

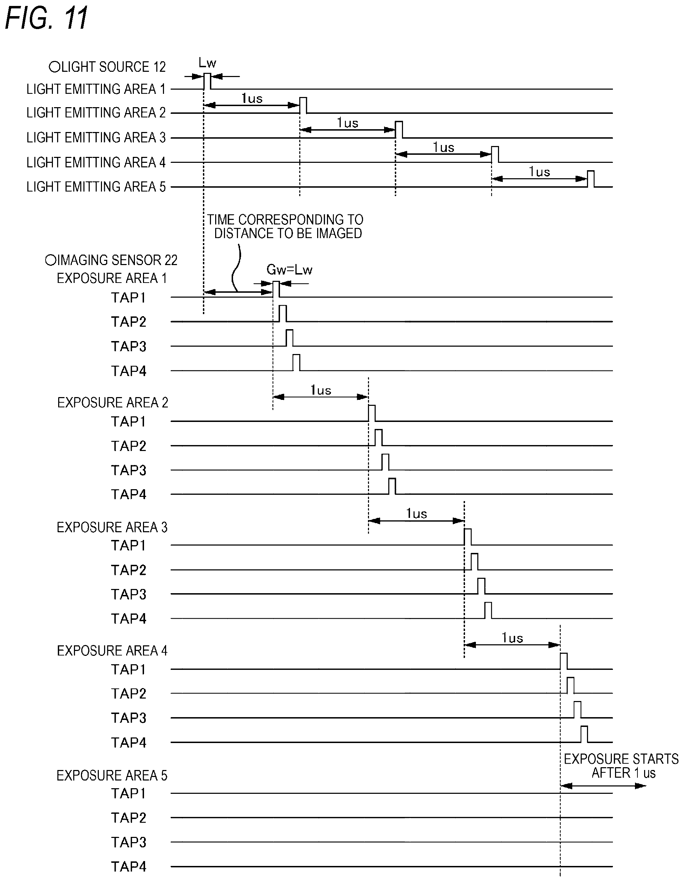

FIG. 11 is a timing chart showing an example of a case where measurement areas are adjacent to each other before and after switching.

In this example, the control unit 30 causes the light source 12 to emit light in an order of the light emitting area 1 → the light emitting area 2 → the light emitting area 3 → the light emitting area 4 → the light emitting area 5. That is, the control unit 30 sequentially switches a measurement area to be irradiated with light such that the measurement area goes from the lower side to the upper side. Accordingly, the control unit 30 switches an area of the imaging sensor 22 that is exposed to the reflected light in an order of the exposure area 1 → the exposure area 2 → the exposure area 3 → the exposure area 4 → the exposure area 5.

In this case, an interval between light emission timings of the light emitting areas is preferably longer than that in a case where the measurement areas are not adjacent to each other (FIG. 9) (in the drawing, an interval is 1 μsec). This is to reduce the influence of the adjacent areas.

If measurement is performed by switching the measurement area in an order from the upper side to the lower side, when switching from an area (for example, the measurement area 3) where a target (here, a vehicle) is present to an area (for example, the measurement area 4) where no target is present, the measurement may be influenced by reflected light from a road surface. By performing the measurement from the lower side to the upper side, such influence can be reduced.

In this way, even when the measurement areas are adjacent to each other before and after the switching, influence of road surface reflection can be reduced as compared with the comparative example. In this case, by switching the measurement area from the lower side to the upper side, it is possible to further reduce influence of the reflected light from the road surface. In this modification, while outputting (reading) an exposure result in a certain exposure area, it is also possible to perform imaging in another exposure area, and thus it is possible to improve a frame rate as compared with the comparative example.

<Modification 2>

In the embodiment described above, the measurement is performed in all the measurement areas (measurement areas 1 to 5), but for example, when measuring a distant target, only a specific area may be measured by narrowing down the measurement areas.

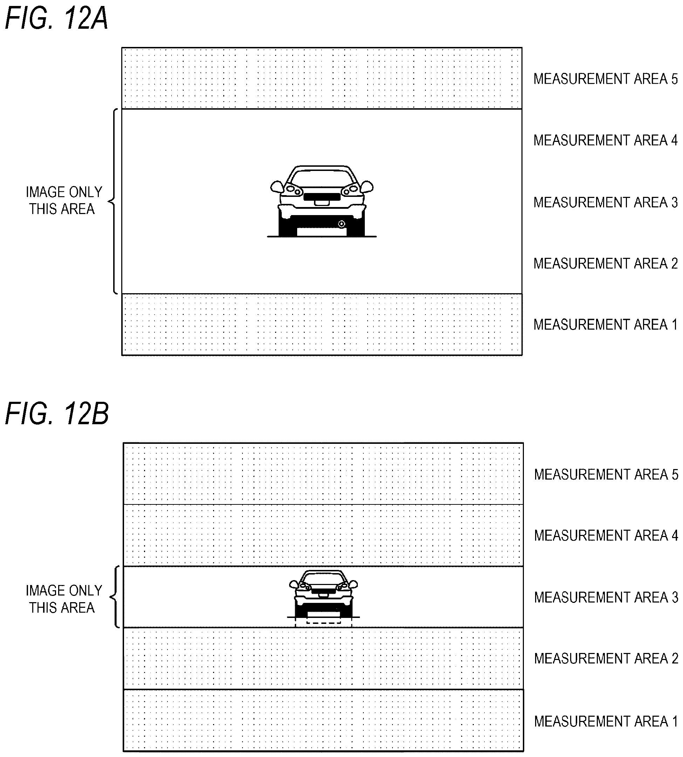

FIGs. 12A and 12B are diagrams showing narrowing-down of measurement areas. In FIG. 12A, a vehicle as a measurement target is located farther away than in a case of FIG. 7. In FIG. 12B, the vehicle is located farther away.

In FIG. 12A, the measurement target (vehicle) is not included in an upper end portion (measurement area 5) and a lower end portion (measurement area 1) among the measurement areas 1 to 5. Therefore, the control unit 30 performs control so as to measure the measurement area 2 to 4 located at a central portion among the measurement areas 1 to 5 without measuring the measurement areas 1 and 5 located at end portions among the measurement areas 1 to 5. That is, the control unit 30 causes the light emitting areas 2 to 4 of the light source 12 to sequentially emit light and causes the corresponding exposure areas 2 to 4 of the imaging sensor 22 to be sequentially exposed. In this case, the measurement areas 2 to 4 correspond to the "specific area". Accordingly, the frame rate can be improved by reducing the measurement target area.

In FIG. 12B, since the measurement target (vehicle) is located farther away, the measurement area can be further narrowed down. In this case, the control unit 30 performs control so as to measure only the measurement area 3 located at a center among the measurement areas 1 to 5 without measuring the measurement areas 1, 2, 4, and 5 located at end portions among the measurement areas 1 to 5. That is, the control unit 30 causes only the light emitting area 3 of the light source 12 to emit light and causes only the exposure area 3 of the imaging sensor 22 to be exposed. In this case, the measurement area 3 corresponds to the "specific area". Accordingly, the frame rate can be further improved. In this example, only the measurement area 3 at the center is measured, but the present disclosure is not limited thereto. For example, depending on a road surface condition or the like, only the measurement area 2 may be measured. However, when measuring a long distance, the center is more desirable since the target is often located at the center.

===== Summary =====

The measurement device 1 according to the present embodiment has been described above. The measurement device 1 includes the light emitting unit 10, the imaging unit 20, and the distance calculation unit 38 of the control unit 30. The light emitting unit 10 can emit light to the measurement areas 1 to 5 at different heights. The imaging unit 20 has the exposure areas 1 to 5 corresponding to the measurement areas 1 to 5 at different heights. The imaging unit 20 is exposed to reflected light from the measurement area using the plurality of light receiving elements PD provided for each of the exposure areas 1 to 5. The distance calculation unit 38 calculates the distance L to a target in the measurement area based on an exposure result of the imaging unit 20. Accordingly, influence of road surface reflection can be reduced.

The light source 12 of the light emitting unit 10 has light emitting areas 1 to 5, and emits light onto a measurement area corresponding to each light emitting area. Accordingly, the measurement area can be switched.

The light source 12 of the light emitting unit 10 and the imaging sensor 22 of the imaging unit 20 are arranged at the same height. Accordingly, influence of a distance to a measurement target can be reduced.

The control unit 30 sequentially switches the measurement areas 1 to 5 to be irradiated with light from the light source 12, and sequentially switches the exposure areas 1 to 5 of the imaging sensor 22 to be exposed to the reflected light. Accordingly, exposure can be performed in the exposure area corresponding to the measurement area.

The control unit 30 sequentially switches the measurement area to be irradiated with light such that two measurement areas before and after the switching are not adjacent to each other (such that a measurement area before the switching and a measurement area after the switching are not adjacent to each other), and sequentially switches the exposure area to be exposed to the reflected light such that two exposure areas before and after the switching are not adjacent to each other (such that an exposure area before the switching and an exposure area after the switching are not adjacent to each other). Accordingly, it is possible to reduce influence of the adjacent measurement areas and to increase measurement accuracy.

In the modification, the control unit 30 sequentially switches a measurement area to be irradiated with light such that the measurement area is sequentially switched from a lower side to an upper side, and sequentially switches an exposure area to be exposed with the reflected light. Accordingly, influence of road surface reflection can be reduced as compared with the comparative example (when no switching is performed) or a case where a measurement area is switched from an upper side to a lower side.

When measuring a distant target, the control unit 30 causes measurement to be performed only in a specific area (for example, the measurement area 3) among all the measurement areas. Accordingly, a frame rate can be improved.

While outputting an exposure result in a certain exposure area, the imaging unit 20 can be exposed to the reflected light in another exposure area. Accordingly, a frame rate can be improved.

The embodiments described above are intended to facilitate understanding of the present disclosure, and are not to be construed as limiting the present disclosure. In addition, it is needless to say that the present disclosure can be changed or improved without departing from the inventive concept thereof, and equivalents thereof are included in the present disclosure.

The present application claims the priority based on Japanese patent application No. 2022-004991 filed on January 17, 2022, and all the contents described in the Japanese patent application are incorporated.

**Claims**

1. A measurement device comprising:

   a light emitting unit configured to emit light to each of a plurality of measurement areas at different heights;
   an exposure unit having a plurality of exposure areas respectively corresponding to the measurement areas at different heights, and exposed to reflected light from the measurement areas by a plurality of light receiving elements respectively provided for the exposure areas; and
   a distance calculation unit configured to calculate a distance to a target in the measurement areas based on an exposure result of the exposure unit.

2. The measurement device according to claim 1, wherein
   the light emitting unit has a plurality of light emitting areas, and emits light to the measurement areas respectively corresponding to the light emitting areas.

3. The measurement device according to claim 1 or 2, wherein
   the light emitting unit and the exposure unit are arranged at the same height.

4. The measurement device according to any one of claims 1 to 3, wherein
   the measurement area to be irradiated with light is sequentially switched, and the exposure area to be exposed with the reflected light is sequentially switched.

5. The measurement device according to claim 4, wherein

the measurement area to be irradiated with light is sequentially switched such that two measurement areas before and after switching are not adjacent to each other, and
   the exposure area to be exposed to the reflected light is sequentially switched such that two exposure areas before and after switching are not adjacent to each other.

6. The measurement device according to claim 4 or 5, wherein
   the measurement area to be irradiated with light is sequentially switched such that the measurement area is sequentially switched from a lower side to an upper side, and the exposure area to be exposed to the reflected light is sequentially switched.

7. The measurement device according to any one of claims 4 to 6, wherein
   when measuring the target at a predetermined distance, only a specific area among the plurality of measurement areas is measured.

8. The measurement device according to any one of claims 1 to 7, wherein
   while outputting an exposure result in a certain light exposure area, the exposure unit is exposed to the reflected light in another exposure area.

## FIG. 1A

## FIG. 1B

FIG. 2

MEASUREMENT DIRECTION

REGION 1          REGION 2          REGION 3          REGION 4

IMAGE OF REGION 1     IMAGE OF REGION 2     IMAGE OF REGION 3     IMAGE OF REGION 4

DISTANCE IMAGE

EP 4 468 035 A1

*FIG. 3*

# FIG. 4

$$T_x = T_{i+1} - L_w \times \frac{S_i}{S_i - S_{i+1}}$$

$S_i$, $S_{i+1}$: SIGNAL VALUES IN EXPOSURE PERIOD IN WHICH REFLECTED LIGHT IS USED FOR EXPOSURE (HERE, $S_i = S_2$, $S_{i+1} = S_3$)

$$L = \frac{C_0 \times T_x}{2} \quad (C_0 \text{ IS SPEED OF LIGHT})$$

## FIG. 5A

12

122 — 121

LIGHT EMITTING AREA 5
LIGHT EMITTING AREA 4
LIGHT EMITTING AREA 3
LIGHT EMITTING AREA 2
LIGHT EMITTING AREA 1

LOWER

VERTICAL DIRECTION

HORIZONTAL DIRECTION

UPPER

## FIG. 5B

22

EXPOSURE AREA 5
EXPOSURE AREA 4
EXPOSURE AREA 3
EXPOSURE AREA 2
EXPOSURE AREA 1

ARRIVAL RANGE OF REFLECTED LIGHT

IMAGING AREA

LOWER

VERTICAL DIRECTION

HORIZONTAL DIRECTION

UPPER

16

# FIG. 6A

TARGET A

TARGET B

LIGHT SOURCE

CAMERA

VERTICAL DIRECTION

MEASUREMENT DIRECTION

# FIG. 6B

12

20

22

12

VERTICAL DIRECTION

HORIZONTAL DIRECTION

*FIG. 7*

A  B  C  D  E

MEASUREMENT AREA 5
MEASUREMENT AREA 4
MEASUREMENT AREA 3
MEASUREMENT AREA 2
MEASUREMENT AREA 1

UPPER
VERTICAL DIRECTION
LOWER
HORIZONTAL DIRECTION

## FIG. 8A

12

LIGHT EMITTING AREA 1

⇩

LIGHT EMITTING AREA 3

⇩

LIGHT EMITTING AREA 5

⇩

LIGHT EMITTING AREA 2

⇩

LIGHT EMITTING AREA 4

## FIG. 8B

22

EXPOSURE AREA 1

⇩

EXPOSURE AREA 3

⇩

EXPOSURE AREA 5

⇩

EXPOSURE AREA 2

⇩

EXPOSURE AREA 4

# FIG. 9

○LIGHT SOURCE 12

LIGHT EMITTING AREA 1 — Lw

LIGHT EMITTING AREA 2 — 4Lw

LIGHT EMITTING AREA 3 — 4Lw

LIGHT EMITTING AREA 4 — 4Lw

LIGHT EMITTING AREA 5 — 4Lw

○IMAGING SENSOR 22
EXPOSURE AREA 1 — Gw=Lw

TAP1

TAP2

TAP3

TAP4

EXPOSURE AREA 2

TAP1

TAP2

TAP3

TAP4

EXPOSURE AREA 3

TAP1

TAP2

TAP3

TAP4

EXPOSURE AREA 4

TAP1

TAP2

TAP3

TAP4

EXPOSURE AREA 5

TAP1

TAP2

TAP3

TAP4

## FIG. 10

EXPOSURE AREA 1 — IMAGING | READING | IMAGING | READING | IMAGING | READING

EXPOSURE AREA 3 — IMAGING | READING | IMAGING | READING | IMAGING | READING

EXPOSURE AREA 5 — IMAGING | READING | IMAGING | READING | IMAGING | READING

EXPOSURE AREA 2 — IMAGING | READING | IMAGING | READING | IMAGING | READING

EXPOSURE AREA 4 — IMAGING | READING | IMAGING | READING | IMAGING | READING

TIME →

EP 4 468 035 A1

## FIG. 11

## FIG. 12A

MEASUREMENT AREA 5

MEASUREMENT AREA 4

MEASUREMENT AREA 3

MEASUREMENT AREA 2

MEASUREMENT AREA 1

IMAGE ONLY
THIS AREA

## FIG. 12B

MEASUREMENT AREA 5

MEASUREMENT AREA 4

MEASUREMENT AREA 3

MEASUREMENT AREA 2

MEASUREMENT AREA 1

IMAGE ONLY
THIS AREA

FIG. 13

LIGHT SOURCE   NORMAL IMAGE

CAMERA

REFLECTED BY
ROAD SURFACE

## INTERNATIONAL SEARCH REPORT

| | International application No. |
|---|---|
| | **PCT/JP2022/043367** |

### A. CLASSIFICATION OF SUBJECT MATTER

***G01S 17/89***(2020.01)i
FI: G01S17/89

According to International Patent Classification (IPC) or to both national classification and IPC

### B. FIELDS SEARCHED

Minimum documentation searched (classification system followed by classification symbols)

G01S 7/48 - G01S 7/51; G01S 17/00 - G01S 17/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/229918 A1 (SONY SEMICONDUCTOR SOLUTIONS CORP) 18 November 2021 (2021-11-18) | 1-2, 4 |
| | paragraphs [0029], [0042]-[0044], [0064]-[0065], fig. 5, 10 | |
| Y | | 3, 7-8 |
| X | WO 2020/137318 A1 (SONY SEMICONDUCTOR SOLUTIONS CORP) 02 July 2020 (2020-07-02) | 1, 4-6 |
| | paragraphs [0019]-[0030], [0052]-[0055], [0097]-[0103] | |
| Y | | 3, 7-8 |
| Y | JP 2021-532368 A (OPSYS TECH LTD) 25 November 2021 (2021-11-25) | 3 |
| | paragraphs [0061]-[0062], [0075], [0078], fig. 14, 16 | |
| Y | WO 2017/141957 A1 (PANASONIC IP MAN CO LTD) 24 August 2017 (2017-08-24) | 7 |
| | paragraphs [0200], [0207]-[0208], fig. 14A-14B | |
| Y | US 2012/0062705 A1 (OVSIANNIKOV, Ilia) 15 March 2012 (2012-03-15) | 8 |
| | paragraphs [0045]-[0057], fig. 1-2 | |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/043367**

| Patent document cited in search report | | | Publication date (day/month/year) | Patent family member(s) | | | Publication date (day/month/year) |
|---|---|---|---|---|---|---|---|
| WO | 2021/229918 | A1 | 18 November 2021 | (Family: none) | | | |
| WO | 2020/137318 | A1 | 02 July 2020 | US | 2021/0356589 | A1 | |
| | | | | paragraphs [0043]-[0054], [0076]-[0079], [0121]-[0127] | | | |
| | | | | JP | 2020-106339 | A | |
| | | | | EP | 3904909 | A1 | |
| | | | | CN | 113272683 | A | |
| JP | 2021-532368 | A | 25 November 2021 | US | 2020/0041614 | A1 | |
| | | | | paragraphs [0061]-[0062], [0075], [0078], fig. 14, 16 | | | |
| | | | | WO | 2020/028173 | A1 | |
| | | | | KR | 10-2021-0029831 | A | |
| | | | | CN | 112543875 | A | |
| | | | | KR | 10-2022-0066422 | A | |
| WO | 2017/141957 | A1 | 24 August 2017 | US | 2018/0329063 | A1 | |
| | | | | paragraphs [0215], [0222]-[0223], fig. 14A-14B | | | |
| | | | | EP | 3418772 | A1 | |
| | | | | CN | 108474849 | A | |
| US | 2012/0062705 | A1 | 15 March 2012 | KR | 10-2012-0025052 | A | |

Form PCT/ISA/210 (patent family annex) (January 2015)

**EP 4 468 035 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019191126 A
- JP 2022004991 A